# EUROPÄISCHE PATENTANMELDUNG

(11) **EP 4 756 545 A1**
(43) Veröffentlichungstag der Anmeldung: **10.06.2026**
(21) Anmeldenummer: 25214616.2
(22) Anmeldetag: 10.11.2025
(51) Int. Cl.: G05B 9/03

(54) **STEUERUNGSSYSTEM FÜR EIN LUFTFAHRZEUG UND LUFTFAHRZEUG**

(30) Priorität: 09.12.2024 DE 102024136724
(71) Anmelder: Liebherr-Aerospace Lindenberg GmbH, 88161 Lindenberg (DE)
(72) Erfinder: GAILE, Anton, 88299 Leutkirch (DE)
(74) Vertreter: Lorenz Seidler Gossel Part. mbB

(57) **Zusammenfassung**

Die vorliegende Erfindung betrifft ein Steuerungssystem für ein Luftfahrzeug mit einer Recheneinheit und einer Untereinheit, insbesondere einer Ventileinheit, die eine Steuereinheit aufweist, wobei die Recheneinheit mit der Steuereinheit nur über einen oder mehrere einkanalige Signalkanäle verbunden ist.

## Beschreibung

Die vorliegende Erfindung betrifft ein Steuerungssystem für ein Luftfahrzeug mit einer Recheneinheit und einer Untereinheit, insbesondere einer Ventileinheit, die eine Steuereinheit aufweist.

Aus dem Stand der Technik sind Steuereinheiten von Ventileinheiten bekannt, welche jeweils mit einem Command- und einem Monitor-Kanal ausgestattet sind.

Solche aus dem Stand der Technik bekannten Steuereinheiten sind typischerweise für die Regelung eines Stroms für die Ansteuerung eines mit der Steuereinheit verbundenen Stellmotors, für die Regelung einer Stellung eines durch den Stellmotor angesteuerten Steuerventils und für die Regelung einer Stellung eines durch das Steuerventil angesteuerten Steuerzylinders ausgebildet und weisen alle notwendigen Überwachungsalgorithmen auf, um Fehler der Ventileinheit oder der Elektronik der Ventileinheit bzw. der Steuereinheit sicher festzustellen.

Dieses macht diese Steuereinheiten komplex, groß und teuer in der Entwicklung und im Serienpreis.

Vor diesem Hintergrund liegt der vorliegenden Erfindung die Aufgabe zugrunde, ein oben genanntes Steuerungssystem, insbesondere im Hinblick auf eine Vereinfachung einer oder mehrerer Steuereinheiten des Steuerungssystems, zu verbessern.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass die Recheneinheit mit der Steuereinheit nur über einen oder mehrere einkanalige Signalkanäle verbunden ist.

Jede Untereinheit ist vorzugsweise eine Ventileinheit oder eine Direct-Drive-Valve (DDV)-Baugruppe oder weist vorzugsweise eine solche auf.

Die Erfindung betrifft vorzugsweise die elektrische Ansteuerung und/oder Regelung einer Direct-Drive-Valve-Baugruppe.

Vorzugsweise ist vorgesehen, dass die Untereinheit weitere, insbesondere drei weitere, Steuereinheiten aufweist, wobei das Steuerungssystem weitere, insbesondere drei weitere, Recheneinheiten aufweist, wobei jede der Recheneinheiten mit jeweils einer der Steuereinheiten nur über einen oder mehrere einkanalige Signalkanäle verbunden ist.

Jede Steuereinheit kann auch als Actuator-Control-Unit (ACU) bezeichnet werden.

Besonders bevorzugt ist jede Steuereinheit als einfacher Leistungsverstärker ausgebildet.

Das Steuerungssystem kann auch als Flugsteuerungs-Architektur bezeichnet werden.

Das Steuerungssystem ist vorzugweise eine Flugsteuerungs-Architektur für Direct-Drive-Valve-Aktuatoren oder Direct-Drive-Valve-Baugruppen.

Vorzugsweise ist vorgesehen, dass das Steuerungssystem weitere, insbesondere drei weitere, Untereinheiten, insbesondere Ventileinheiten, aufweist, wobei jede der weiteren Untereinheiten weitere, insbesondere jeweils vier weitere, Steuereinheiten aufweist, wobei jede Recheneinheit mit jeweils genau einer Steuereinheit jeder Untereinheit nur über einen oder mehrere einkanalige Signalkanäle verbunden ist.

Vorzugsweise ist vorgesehen, dass die Untereinheiten, insbesondere Ventileinheiten, baugleich ausgeführt sind, wobei entsprechende, insbesondere entsprechend angeordnete und/oder funktional entsprechende, Steuereinheiten jeder Einheit mit derselben Recheneinheit verbunden sind.

Vorzugsweise ist vorgesehen, dass jede Untereinheit ein oder mehrere, insbesondere vier, Stellelemente, insbesondere Stellmotoren, aufweist, wobei jede Steuereinheit mit genau einem Stellelement nur über einen oder mehrere einkanalige Signalkanäle verbunden ist.

Jeder Stellmotor ist vorzugsweise ein Torque-Motor, insbesondere ein Limited Angle Torque Motor.

Vorzugsweise ist vorgesehen, dass jede Untereinheit ein oder mehrere, insbesondere zwei, Steuerglieder, insbesondere Steuerventile, aufweist, wobei jedes der Steuerglieder durch eines oder mehrere, insbesondere zwei, der Stellelemente der jeweiligen Untereinheit ansteuerbar ist.

Jedes Steuerglied ist vorzugsweise ein Hydraulikventil, insbesondere ein Direct-Drive-Valve (DDV).

Vorzugsweise ist vorgesehen, dass jeweils zwei Steuereinheiten ein Steuergerät zur Ansteuerung eines Steuerglieds bilden, wobei die zwei Steuereinheiten jeweils als dissimilare Typen aufgebaut sind, wobei ein Typ einer Steuereinheit von einem für die Ansteuerung dieses Typs ausgebildeter Recheneinheit ansteuerbar und/oder nur über einen oder mehrere einkanalige Signalkanäle verbunden ist.

Vorzugsweise ist vorgesehen, dass jede Untereinheit, insbesondere nur, ein Stellglied, insbesondere einen Stellzylinder aufweist, wobei jedes der Stellglieder durch eines oder mehrere der Steuerglieder der jeweiligen Untereinheit ansteuerbar ist.

Jedes Stellglied, insbesondere Stellzylinder, kann auch als Aktuator bezeichnet werden oder Bestandteil eines Aktuators sein. Vorzugsweise kann auch jede Untereinheit ein Aktuator sein.

Vorzugsweise wirken in der Direct-Drive-Valve-Baugruppe vier Torque-Motoren, insbesondere Limited Angle Torque Motoren, auf zwei Hydraulikventile, welche wiederum den hydraulischen Durchfluss zu einem Stellzylinder regeln.

Vorzugsweise sind alle Stellelemente, alle Steuerglieder, alle Stellglieder, und/oder alle Untereinheiten baugleich ausgeführt. Es ist auch denkbar, dass einzelne der genannten Elemente nicht baugleich zu den jeweiligen anderen gattungsgleichen Elementen ausgeführt sind.

Vorzugsweise zwei dissimilare Typen von Steuereinheiten vorgesehen, insbesondere wobei zwei dissimilare Steuereinheiten ein Steuergerät bilden.

Vorzugsweise ist vorgesehen, dass jede Untereinheit ein oder mehrere Messmittel, insbesondere einen oder mehrere Differentialtransformatoren, aufweist, die jeweils ausgebildet und angeordnet sind, um eine Stellung eines, mehrerer oder jeweils jedes der Steuerglieder und/oder eines, mehrerer oder jeweils jedes der Stellglieder der jeweiligen Untereinheit zu erfassen, wobei eines, mehrere oder jedes Messmittel mit einer, mehrerer oder aller der Recheneinheiten über einen oder mehrere Signalkanäle verbunden sind und/oder wobei eines, mehrere oder jedes Messmittel mit einer, mehrerer oder aller der Steuereinheiten der jeweiligen Untereinheit über einen oder mehrere Signalkanäle verbunden sind.

Vorzugsweise ist vorgesehen, dass eine, mehrere oder jede der Steuereinheiten dazu ausgebildet sind, eine Stellung des mit der jeweiligen Steuereinheit verbundenen Stellelements, eine Stellung desjenigen Steuerglieds, das durch das mit der jeweiligen Steuereinheit verbundene Stellelement ansteuerbar ist und/oder eine Stellung desjenigen Stellglieds, dass durch dasjenige Steuerglied ansteuerbar ist, das durch das mit der jeweiligen Steuereinheit verbundene Stellelement ansteuerbar ist, zu regeln.

Vorzugsweise ist vorgesehen, dass eine, mehrere oder jede der Recheneinheiten dazu ausgebildet sind, eine Stellung eines, mehrere oder jedes Steuerglieds und/oder Stellglieds einer, mehrerer oder jeder der Untereinheiten, zu regeln.

Vorzugsweise ist vorgesehen, dass eine. mehrere oder jede der Steuereinheiten ein oder kein programmierbares Bauelement, insbesondere einen oder keinen Mikrocontroller und/oder ein oder kein Field Programmable Gate Array (FPGA), aufweist und/oder nur aus einfachen Bauelementen besteht.

Vorzugsweise ist vorgesehen, dass das eine, mehrere oder jede der Steuereinheiten durch genau eine oder mehrere Versorgungen, insbesondere Versorgungsleitungen, mit elektrischer Leistung versorgt wird.

Vorzugsweise ist vorgesehen, dass zwischen zwei, mehreren oder jeder der Steuereinheiten keine direkte Kommunikation erfolgen kann.

Vorzugsweise ist vorgesehen, dass eine, mehrere oder jede der Recheneinheiten ausgebildet sind, um einen, mehrere oder jeden mit der jeweiligen Recheneinheit verbundenen Signalkanäle zu deaktivieren.

Vorzugsweise ist vorgesehen, dass eine, mehrere oder jede der Recheneinheiten ausgebildet sind, um an die mit der jeweiligen Recheneinheit verbundenen Steuereinheiten gesendete Signale mindestens teilweise untereinander zu konsolidieren.

Vorzugsweise ist vorgesehen, dass eine, mehrere oder jede der Steuereinheiten mit der jeweiligen Recheneinheit derart verbunden ist, dass die jeweilige Steuereinheit ein, insbesondere ein an ein mit der jeweiligen Steuereinheit verbundenes Stellelement gesendetes, Signal an die mit der jeweiligen Steuereinheit verbundenen Recheneinheit senden kann.

Vorzugsweise ist vorgesehen, dass die Recheneinheiten Bestandteil einer Zentralrecheneinheit, insbesondere eines Flugsteuerungscomputers (FCC) und/oder nur logische Einheiten der Zentralrecheneinheit bilden und in diese integriert sind oder separate Recheneinheiten sind.

Vorzugsweise ist vorgesehen, dass jede Steuereinheit in einer baulichen Einheit mit der jeweils zugehörigen Untereinheit angeordnet ist, dass die Steuereinheiten jeweils einer Untereinheit in einer von der baulichen Einheit der sonstigen Komponenten der Untereinheit separaten baulichen Einheit angeordnet sind, oder dass diejenigen funktional entsprechenden Steuereinheiten baugleicher Untereinheiten, insbesondere Ventileinheiten, jeweils zusammen in einer von den Untereinheiten separaten baulichen Einheit angeordnet sind.

Vorzugsweise ist vorgesehen, dass eine, mehrere oder jede der Recheneinheiten einen Command- und einen Monitor-Kanal aufweist oder daraus besteht.

Vorzugsweise ist vorgesehen, dass das Steuerungssystem derart ausgebildet ist, dass kein Einzelfehler in einer der Recheneinheiten zu einem Verlust der Ansteuerung von mehr als zwei Steuereinheiten einer Untereinheit führt.

Die Erfindung betrifft auch ein Luftfahrzeug, insbesondere Verkehrsflugzeug, Helikopter oder Kampfflugzeug, mit einem erfindungsgemäßen Steuerungssystem.

Vorzugsweise ist das Steuerungssystem eines für einen Helikopter, Fighter oder ein anderes Flugzeug, bei denen sogenannte "Direct-Drive-Valves" zur Anwendung kommen.

Die Erfindung betrifft auch ein Verfahren zum Betreiben eines, insbesondere erfindungsgemäßen, Steuerungssystems für ein Luftfahrzeug, wobei eine oder mehrere Recheneinheiten eine Stellung einer Untereinheit, insbesondere eines Stellglieds der Untereinheit, und/oder eine Steuereinheit einer Untereinheit eine Stellung eines Stellelements und/oder Steuerglieds dieser Untereinheit regeln.

Vorzugsweise ist jede der Steuereinheiten zur Ansteuerung eines Stellelements, bspw. in Form eines elektrischen Drehantriebs, insbesondere eines Stellmotors, welches dazu dient Steuerglieder, bspw. in Form von hydraulischen Steuerventilen zu steuern, welche wiederum den hydraulischen Durchfluss an einem Stellglied, insbesondere einem Stellzylinder, regeln, als einfacher Leistungsverstärker ausgeführt.

Das Monitoring und die Stellungsregelung der Steuerventile und des Stellzylinders wird vorzugsweise vom Flugsteuerungscomputer bzw. Flight Control Computer (FCC) übernommen. Der Begriff "Stellung" ist vorzugsweise synonym zum Begriff "Position".

Die Erfindung ermöglicht vorzugsweise eine kostengünstige Ansteuerung von DDV-Baugruppen, respektive deren Torque-Motoren, indem vorzugsweise alle komplexen Regelvorgänge von den Steuereinheiten in die Recheneinheiten bzw. den Flugsteuerungscomputer verlegt werden. Jede Steuereinheit kann dadurch sehr einfach ausgeführt werden und die Recheneinheiten bzw. der Flugsteuerungscomputer, welche für komplexe Regelvorgänge und entsprechende Kommunikation zwischen den einzelnen Kanälen ausgebildet sind, bedarf vorzugsweise keiner Änderung an der Hardware, sondern vorzugsweise lediglich zusätzliche Software, um die Funktionalität zu übernehmen.

Jede Steuereinheit ist vorzugsweise als rein einkanaliger Verstärkerbaustein ausgeführt. Vorzugsweise sind, insbesondere bei sicherheitskritischen Anwendungen, um einen "Common-Mode"-Fehler zu vermeiden, zwei dissimilare Steuereinheiten in einem Steuergerät, insbesondere zur Ansteuerung eines Steuerglieds, insbesondere Steuerventil, vorgesehen. Da es sich aber in diesem Fall um sehr einfache Steuereinheiten handelt, hält sich hierbei der Entwicklungs- und Zulassungsaufwand vorzugsweise in Grenzen.

Jede Steuereinheit umfasst vorzugsweise zwei dissimilare Steuergeräte, die jeweils alle Funktionen der Steuereinheit aufweisen und einen Unterschied im Aufbau aufweisen.

Vorzugsweise ist jede Steuereinheit als "simple electronic" ausgeführt. Vorzugsweise weist keine Steuereinheit Mikroprozessoren, FPGAs oder andere programmierbare Bausteine auf. Dieses vereinfacht den Entwicklungsprozess und die Zulassung der Steuereinheiten vorzugsweise.

Vorzugsweise erfolgt die Ansteuerung jeder Steuereinheit durch den Flugsteuerungscomputer oder die jeweilige mit der jeweiligen Steuereinheit verbundene Recheneinheit über eine analoge Schnittstelle, über die z.B. ein Steuerstrom im Bereich von +/- 8 mA fließt.

Die Schnittstelle zwischen jeder Steuereinheit und der mit der jeweiligen Steuereinheit verbundenen Recheneinheit bzw. dem Flugsteuerungscomputer (FCC) ist vorzugsweise derart ausgebildet, dass, insbesondere nur, ein Steuersignal von der jeweiligen Recheneinheit bzw. dem FCC an die jeweilige Steuereinheit und, insbesondere nur, ein Feedbacksignal für das von der jeweiligen Steuereinheit ausgegebenen Steuersignal für das mit der jeweiligen Steuereinheit verbundene Stellelement, insbesondere der Motorstrom für den Stellmotor, übermittelt werden kann. Vorzugsweise ist die Schnittstelle jeder Steuereinheit ferner ausgebildet, dass Temperaturinformationen oder andere für die Überwachung notwendige Signale zwischen der jeweiligen Steuereinheit und der jeweiligen Recheneinheit übermittelt werden können.

Die Schnittstelle zwischen jeder Steuereinheit und der jeweiligen Recheneinheit umfasst vorzugsweise einen oder mehrere einkanalige Signalkanäle zwischen der jeweiligen Recheneinheit und der jeweiligen Steuereinheit, die derart ausgebildet sind, dass nur Signale von der Recheneinheit an die Steuereinheit übermittelt werden können und/oder einen oder mehrere einkanalige Signalkanäle zwischen der jeweiligen Recheneinheit und der jeweiligen Steuereinheit, die derart ausgebildet sind, dass nur Signale von der Steuereinheit an die Recheneinheit übermittelt werden können.

Jede der Steuereinheiten ist vorzugsweise mit keinem mehrkanaligen, insbesondere zweikanaligen, Signalkanal verbunden.

Zwischen jeder Steuereinheit und der jeweiligen mit dieser Steuereinheit verbundenen Recheneinheit und/oder durch jede Schnittstelle kann eine digitale Signalübertragung und/oder eine analoge Signalübertragung erfolgen. Jede Schnittstelle kann also zur digitalen Signalübertragung und/oder zur analogen Signalübertragung ausgebildet sein.

Insbesondere sofern eine digitale Signalübertragung durch jede Schnittstelle erfolgt, erfolgt vorzugsweise kein Feedback, also keine Signalübertragung vom Steuerglied und/oder vom Stellglied zurück zur jeweiligen zugeordneten Steuereinheit. Vorzugsweise werden in diesem Fall alle Informationen, wie Stellung des Steuerglieds und/oder Stellung des Stellglieds direkt an die jeweilige Recheneinheit bzw. den Flugsteuerungscomputer übermittelt.

Vorzugsweise kann die Regelung der Stellung des Steuerglieds und/oder des Stellglieds durch die jeweilige dem Steuerglied bzw. dem Stellglied zugeordnete Steuereinheit erfolgen.

Bspw. sofern es bspw. aus Gründen einer geforderten Dynamik notwendig ist, die Stellung eines Steuerglieds, insbesondere eines Steuerventils, mit sehr geringer Verzögerung zu regeln, kann die Regelung der Stellung des Steuerglieds auch von der jeweiligen Steuereinheit übernommen werden. Insbesondere um jede Steuereinheit dennoch einfach zu halten und auf einen zusätzlichen Monitorkanal in der Steuereinheit verzichten zu können, wird das Stellungssignal des Steuerglieds vorzugsweise auch der Recheneinheit(en) bzw. dem Flugsteuerungscomputer zur Verfügung gestellt. Die Überwachung der jeweiligen Steuereinheit und des jeweiligen Steuerglieds und/oder Stellglieds bzw. des Aktuators erfolgt vorzugsweise durch die Recheneinheit(en) und/oder den oder die Flugsteuerungscomputer.

Vorzugsweise erfolgt keine Cross-Kommunikation zwischen den Steuereinheiten. Vorzugsweise erfolgt ein Voting von Feedbacksignalen über die Recheneinheit(en) und/oder den oder die Flugsteuerungscomputer. Hierdurch werden vorzugsweise Fehlerquellen ausgeschlossen und der Aufbau der Steuereinheiten wird vorzugsweise vereinfacht.

Sollte in einer Steuereinheit ein Fehler auftreten, ist es vorzugsweise vorgesehen, dass die Recheneinheit(en) und/oder der oder die Flugsteuerungscomputer über ein Enable-Signal jede einzelne Steuereinheit sicher abschalten können. Hierbei ist vorzugsweise vorgesehen, dass aufgrund des DDV-Konzepts, wobei letztlich die einzelnen Ansteuersignale für die Steuerglieder als eine Summe der Drehmomente der einzelnen Stellelemente, insbesondere Torque-Motoren (TM), gebildet werden, sehr robust ist gegen Abweichungen einzelner Ansteuersignale und deshalb die Recheneinheit(en) und/oder der oder die Flugsteuerungscomputer relativ viel Zeit haben eine Abweichung festzustellen, bevor es zu einem kritischen Fehlertransienten kommt.

Vorzugsweise ist eine Flugsteuerungs-Architektur mit Untereinheiten, welche Direct Drive-Valve (DDV)-Technologie verwenden und eine oder mehrere Steuereinheiten aufweist, vorgesehen, wobei vorzugsweise jeder mit einer, mehrere oder jeder der Steuereinheiten verbundene Signalkanal einkanalig ausgeführt ist.

Vorzugsweise ist vorgesehen, dass jeder Signalkanal genau einem Stellmotor der Untereinheit zugeordnet ist.

Vorzugsweise ist vorgesehen, dass zwischen den Signalkanälen oder Steuereinheiten keine Cross-Kommunikation stattfindet.

Vorzugsweise ist vorgesehen, dass jede Steuereinheit nur ein Eingangssignal erhält.

Vorzugsweise ist vorgesehen, dass jede Steuereinheit vom Flight Control Computer (FCC) abgeschaltet werden kann.

Vorzugsweise ist vorgesehen, dass jede Steuereinheit von einer Recheneinheit bzw. einem FCC angesteuert wird.

Vorzugsweise ist vorgesehen, dass jede Steuereinheit ein von allen Recheneinheiten oder FCCs konsolidiertes Signal erhält. Jede Recheneinheit kann ein Kanal eines oder des FCC sein.

Vorzugsweise ist vorgesehen, dass jede Steuereinheit ihr Ausgangsignal zu Monitorzwecken an die jeweilige mit der jeweiligen Steuereinheit verbundene Recheneinheit oder den FCC zurückmeldet.

Vorzugsweise ist vorgesehen, dass die Stellungssignale der Ventilgruppe, insbesondere der Steuerglieder bzw. Steuerventile und die Stellungssignale des Stellgleids bzw. Stellzylinders an den FCC zurückgemeldet werden und nicht über die zugeordnete Steuereinheit laufen. Jede Steuereinheit kann einen ACU-Kanal aufweisen oder darstellen.

Vorzugsweise ist vorgesehen, dass die Regelung der Ventilgruppe, insbesondere der Steuerglieder bzw. Steuerventile, und der Stellung des Stellglieds bzw. Stellzylinders durch den FCC erfolgt.

Vorzugsweise ist vorgesehen, dass die Regelung der Ventilgruppe, insbesondere der Steuerglieder bzw. Steuerventile durch die Steuereinheit oder Steuereinheiten erfolgt und die Regelung der Stellung des Stellglieds bzw. Stellzylinders durch den FCC erfolgt.

Vorzugsweise ist vorgesehen, dass der FCC aus vier individuellen FCC-Kanälen oder Recheneinheiten, die vier einzelne Geräte sein können, besteht oder diese aufweist und jeder dieser FCC-Kanäle oder Recheneinheiten jeweils eine Steuereinheit einer oder mehrerer Untereinheiten ansteuert.

Vorzugsweise ist vorgesehen, dass jeder FCC-Kanal oder jede Recheneinheit einen Command- und einen Monitor-Kanal aufweist.

Vorzugsweise ist vorgesehen, dass der FCC nicht aus vier FCC-Kanälen bzw. Recheneinheiten besteht oder nicht vier FCC-Kanäle bzw. Recheneinheiten aufweist, wobei vorzugsweise vorgesehen ist, dass kein Einzelfehler im FCC zu einem Verlust der Ansteuerung vom mehr als zwei Steuereinheiten einer Untereinheit führt.

Die Funktionen der Recheneinheiten können auch von einer integrierten Zentralrecheneinheit vorgenommen werden. In anderen Worten kann auch nur genau eine Recheneinheit vorhanden sein, die die Funktion der Recheneinheiten aufweist.

Vorzugsweise ist vorgesehen, dass jede Steuereinheit nur eine oder mehrere Leistungsversorgungen aufweist.

Vorzugsweise ist vorgesehen, dass jede Steuereinheit nur aus "non-complex"-Elektronikkomponenten aufgebaut ist.

Vorzugsweise ist vorgesehen, dass jede Steuereinheit einen oder keinen FPGA oder einen oder keinen Mikrocontroller aufweist.

Vorzugsweise ist vorgesehen, dass die Steuereinheiten einer Untereinheit direkt an dieser angebaut sind bzw. in diese integriert sind.

Vorzugsweise ist vorgesehen, dass die Steuereinheiten einer Untereinheit in einer Baugruppe zusammengefasst sind, jedoch separat zu Untereinheit angeordnet sind.

Vorzugsweise ist vorgesehen, dass funktional entsprechende Steuereinheiten jeder Untereinheit jeweils in einem Gehäuse zusammengefasst sind.

Vorzugsweise ist vorgesehen, dass mehrere Steuereinheiten in einem Gehäuse angeordnet sind, und jede dieser Steuereinheiten von mehr als einer elektrischen Versorgung versorgt wird.

Vorzugsweise ist vorgesehen, dass die Flugsteuerungs-Architektur bei einem Helikopter, Fighter Aircraft oder Passagierflugzeug verwendet wird.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigt die einzige
- Figur:: einen schematischen Schaltplan einer Ausführungsform eines erfindungsgemäßen Steuerungssystems.

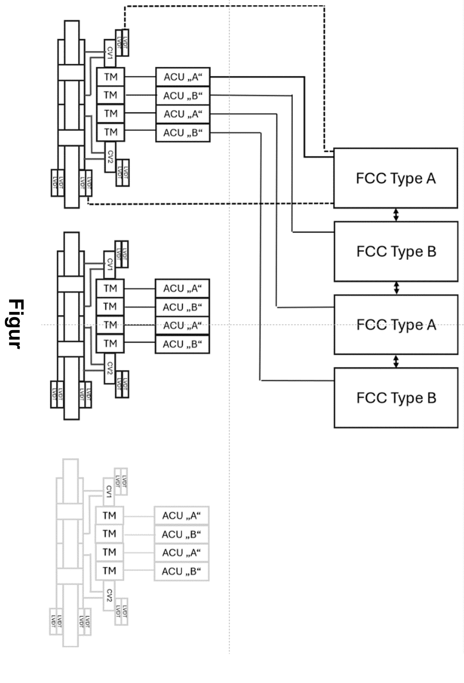

Das in der Figur dargestellte Steuerungssystem weist vier Recheneinheiten, wobei zwei Typen FCC Type A und FCC Type B vorhanden sind und jeder Typ zweimal vorhanden ist.

Das Steuerungssystem weist ferner zwei Untereinheiten, die mit dicken Linien dargestellt sind auf. Es können aber mehre als zwei Untereinheiten vorhanden sein, wie dies durch die mit dünnen Linien dargestellte Untereinheit angedeutet ist. Die Anzahl der Untereinheiten ist beliebig. Bei Helikopter Anwendungen sind typischerweise vier Untereinheiten vorhanden.

Die Untereinheiten sind Ventileinheiten bzw. DDV-Baugruppen.

Jede der Untereinheiten weist vier Steuereinheiten, wobei zwei Typen ACU "A" und ACU "B" vorhanden sind und jeder Typ in jeder Untereinheit zweimal vorhanden ist.

Aus Gründen der Übersichtlichkeit sind in der Figur die in der Figur mit durchgezogenen Linien dargestellten Ansteuer-Verbindungen nur für eine Untereinheit dargestellt. Es kommandiert in dem Ausführungsbeispiel jede Recheneinheit jeweils eine Steuereinheit jeder Untereinheit.

Jede Recheneinheit ist somit mit der jeweils entsprechenden Steuereinheit jeder Untereinheit über einen einkanaligen Signalkanal verbunden, wobei dies in der Figur nur für eine Untereinheit dargestellt ist.

Jede Untereinheit weist vier Steuerelemente in Form von Stellmotoren, die als Torque-Motoren TM ausgebildet sind auf. Jede der Steuereinheiten ist mit einem Torque-Motor über einen einkanaligen Signalkanal verbunden.

Jede Untereinheit weist zwei Steuerglieder in Form von Steuerventilen CV1 und CV2 auf.

Jeweils eine Steuereinheit des Typs ACU "A" und eine Steuereinheit des Typs ACU "B" bilden ein Steuergerät für jeweils ein Steuerventil, wobei das Steuerventil durch zwei Torque-Motoren TM, die jeweils von einer Steuereinheit eines anderen Typs angesteuert werden, angesteuert wird.

Jede Untereinheit weist ein Stellglied in Form eines Stellzylinders auf.

Die Steuerventile CV1 und CV2 steuern den hydraulischen Durchfluss zum Stellzylinder, wie dies aus der Figur hervorgeht. Hierzu ist jede Ventil CV1 bzw. CV2 mit Kammern des Stellzylinders verbunden. Durch die Steuerventile CV1 und CV2 kann somit der Stellzylinder in seiner Stellung verändert werden.

Jede Untereinheit weist drei Differentialtransformatoren, die in der Figur durch die zwei mit LVDT beschrifteten Kästchen dargestellt sind, auf.

An jedem Steuerventil CV1 und CV2 ist ein Differentialtransformator angeordnet, der jeweils ausgebildet ist, um eine Stellung des jeweiligen Steuerventils CV1 oder CV2 zu erfassen.

An dem Stellzylinder ist ebenfalls ein Differentialtransformator angeordnet, der ausgebildet ist, um eine Stellung des Stellzylinders zu erfassen.

Auch sind in der Figur aus Gründen der Übersichtlichkeit nur die in der Figur gestrichelt dargestellten Feedback-Verbindungen von einer Untereinheit an eine Recheneinheit dargestellt. In dem Ausführungsbeispiel erhält jede Recheneinheit von jeder einzelnen Untereinheit ein Stellungssignal von einem Steuerventil CV1 oder CV2 zugeordneten Differentialtransformator oder von beiden jeweils einem der Steuerventile CV1 und CV2 zugeordneten Differentialtransformatoren und ein Stellungssignal von dem dem Stellzylinder zugeordneten Differentialtransformator.

Die Konsolidierung oder gegebenenfalls ein Voting der Signale untereinander findet über eine in der Figur mit Doppelfpfeilen dargestellte Cross-Kommunikation zwischen den einzelnen Recheneinheiten statt. Die Recheneinheiten können in getrennten Gehäusen angeordnet sein, jeweils zu Gruppen zusammengefasst sein oder jeweils aus Control- und Monitor-Lane bzw. Command- und Monitor-Kanal bestehen.

Bezüglich der baulichen Ausführung der Steuereinheiten sind neben den in der Figur gezeigten auch anderen Bauformen denkbar. So können z.B. die Steuereinheiten direkt auf dem Stellmotor angeflanscht sein, als Vierergruppe separat angeordnet oder auch als eine zentrale Einheit alle Steuereinheiten in einem Gehäuse vereint sein.

Die Steuereinheiten des Typs ACU "A" und des Typs ACU "B" können für mehrere Untereinheiten jeweils in einem Gehäuse zusammengefasst sein.

In vorteilhafter Weise dient die Erfindung dazu, insbesondere bei sicherheitskritischen Anwendungen, wie z.B. bei Fly-By-Wire-Steuerungen von Helikoptern, bei denen Direct-Drive-Valves (DDVs) zur Anwendung kommen, eine Vereinfachung der Architektur des Steuerungssystems zu erreichen und dadurch Kosten und auch Gewicht zu sparen.

In vorteilhafter Weise können durch die Erfindung die Entwicklungskosten für ein Steuerungssystem reduziert werden. Dieses wird dadurch erreicht, dass eine aus dem Stand der Technik bekannte Steuereinheit bezüglich Funktionsumfang und auch bezüglich Hardware-Aufwand stark vereinfacht wird und mehr Funktionen in eine oder mehrere Recheneinheiten und/oder in den Flugsteuerungscomputer bzw. Flight-Control-Computer (FCC) verlagert werden.

## Patentansprüche

1. Steuerungssystem für ein Luftfahrzeug mit einer Recheneinheit und einer Untereinheit, insbesondere einer Ventileinheit, die eine Steuereinheit aufweist, **dadurch gekennzeichnet, dass** die Recheneinheit mit der Steuereinheit nur über einen oder mehrere einkanalige Signalkanäle verbunden ist.

2. Steuerungssystem nach Anspruch 1, **dadurch gekennzeichnet, dass** die Untereinheit weitere, insbesondere drei weitere, Steuereinheiten aufweist, wobei das Steuerungssystem weitere, insbesondere drei weitere, Recheneinheiten aufweist, wobei jede der Recheneinheiten mit jeweils einer der Steuereinheiten nur über einen oder mehrere einkanalige Signalkanäle verbunden ist und dass das Steuerungssystem wahlweise weitere, insbesondere drei weitere, Untereinheiten, insbesondere Ventileinheiten, aufweist, wobei jede der weiteren Untereinheiten weitere, insbesondere jeweils vier weitere, Steuereinheiten aufweist, wobei jede Recheneinheit mit jeweils genau einer Steuereinheit jeder Untereinheit nur über einen oder mehrere einkanalige Signalkanäle verbunden ist.

3. Steuerungssystem nach Anspruch 2, **dadurch gekennzeichnet, dass** die Untereinheiten, insbesondere Ventileinheiten, baugleich ausgeführt sind, wobei entsprechende, insbesondere entsprechend angeordnete und/oder funktional entsprechende, Steuereinheiten jeder Einheit mit derselben Recheneinheit verbunden sind.

4. Steuerungssystem nach einem der vorhergehenden Ansprüche, **dadurch gekennzeichnet, dass** jede Untereinheit ein oder mehrere, insbesondere vier, Stellelemente, insbesondere Stellmotoren, aufweist, wobei jede Steuereinheit mit genau einem Stellelement nur über einen oder mehrere einkanalige Signalkanäle verbunden ist und dass wahlweise jede Untereinheit ein oder mehrere, insbesondere zwei, Steuerglieder, insbesondere Steuerventile, aufweist, wobei jedes der Steuerglieder durch eines oder mehrere, insbesondere zwei, der Stellelemente der jeweiligen Untereinheit ansteuerbar ist.

5. Steuerungssystem nach Anspruch 4, **dadurch gekennzeichnet, dass** jeweils zwei Steuereinheiten ein Steuergerät zur Ansteuerung eines Steuerglieds bilden, wobei die zwei Steuereinheiten jeweils als dissimilare Typen aufgebaut sind, wobei ein Typ einer Steuereinheit von einem für die Ansteuerung dieses Typs ausgebildeter Recheneinheit ansteuerbar und/oder nur über einen oder mehrere einkanalige Signalkanäle verbunden ist.

6. Steuerungssystem nach einem der Ansprüche 5, **dadurch gekennzeichnet, dass** jede Untereinheit, insbesondere nur, ein Stellglied, insbesondere einen Stellzylinder aufweist, wobei jedes der Stellglieder durch eines oder mehrere der Steuerglieder der jeweiligen Untereinheit ansteuerbar ist.

7. Steuerungssystem nach einem der Ansprüche 5 oder 6, **dadurch gekennzeichnet, dass** jede Untereinheit ein oder mehrere Messmittel, insbesondere einen oder mehrere Differentialtransformatoren, aufweist, die jeweils ausgebildet und angeordnet sind, um eine Stellung eines, mehrerer oder jeweils jedes der Steuerglieder und/oder eines, mehrerer oder jeweils jedes der Stellglieder der jeweiligen Untereinheit zu erfassen, wobei eines, mehrere oder jedes Messmittel mit einer, mehrerer oder aller der Recheneinheiten über einen oder mehrere Signalkanäle verbunden sind und/oder wobei eines, mehrere oder jedes Messmittel mit einer, mehrerer oder aller der Steuereinheiten der jeweiligen Untereinheit über einen oder mehrere Signalkanäle verbunden sind.

8. Steuerungssystem nach einem der Ansprüche 5 bis 7, **dadurch gekennzeichnet, dass** eine, mehrere oder jede der Steuereinheiten dazu ausgebildet sind, eine Stellung des mit der jeweiligen Steuereinheit verbundenen Stellelements, eine Stellung desjenigen Steuerglieds, das durch das mit der jeweiligen Steuereinheit verbundene Stellelement ansteuerbar ist und/oder eine Stellung desjenigen Stellglieds, dass durch dasjenige Steuerglied ansteuerbar ist, das durch das mit der jeweiligen Steuereinheit verbundene Stellelement ansteuerbar ist, zu regeln und/oder dass eine, mehrere oder jede der Recheneinheiten dazu ausgebildet sind, eine Stellung eines, mehrere oder jedes Steuerglieds und/oder Stellglieds einer, mehrerer oder jeder der Untereinheiten, zu regeln.

9. Steuerungssystem nach einem der vorhergehenden Ansprüche, **dadurch gekennzeichnet, dass** eine, mehrere oder jede der Steuereinheiten ein oder kein programmierbares Bauelement, insbesondere einen oder keinen Mikrocontroller und/oder ein oder kein Field Programmable Gate Array (FPGA), aufweist und/oder nur aus einfachen Bauelementen besteht und/oder dass das eine, mehrere oder jede der Steuereinheiten durch genau eine oder mehrere Versorgungen, insbesondere Versorgungsleitungen, mit elektrischer Leistung versorgt wird und/oder dass zwischen zwei, mehreren oder jeder der Steuereinheiten keine direkte Kommunikation erfolgen kann.

10. Steuerungssystem nach einem der vorhergehenden Ansprüche, **dadurch gekennzeichnet, dass** eine, mehrere oder jede der Recheneinheiten ausgebildet sind, um einen, mehrere oder jeden mit der jeweiligen Recheneinheit verbundenen Signalkanäle zu deaktivieren und/oder dass eine, mehrere oder jede der Recheneinheiten ausgebildet sind, um an die mit der jeweiligen Recheneinheit verbundenen Steuereinheiten gesendete Signale mindestens teilweise untereinander zu konsolidieren.

11. Steuerungssystem nach einem der vorhergehenden Ansprüche, **dadurch gekennzeichnet, dass** eine, mehrere oder jede der Steuereinheiten mit der jeweiligen Recheneinheit derart verbunden ist, dass die jeweilige Steuereinheit ein, insbesondere ein an ein mit der jeweiligen Steuereinheit verbundenes Stellelement gesendetes, Signal an die mit der jeweiligen Steuereinheit verbundenen Recheneinheit senden kann.

12. Steuerungssystem nach einem der vorhergehenden Ansprüche, **dadurch gekennzeichnet, dass** die Recheneinheiten Bestandteil einer Zentralrecheneinheit, insbesondere eines Flugsteuerungscomputers (FCC) und/oder nur logische Einheiten der Zentralrecheneinheit bilden und in diese integriert sind oder separate Recheneinheiten sind.

13. Steuerungssystem nach einem der vorhergehenden Ansprüche, **dadurch gekennzeichnet, dass** jede Steuereinheit in einer baulichen Einheit mit der jeweils zugehörigen Untereinheit angeordnet ist, dass die Steuereinheiten jeweils einer Untereinheit in einer von der baulichen Einheit der sonstigen Komponenten der Untereinheit separaten baulichen Einheit angeordnet sind, oder dass diejenigen funktional entsprechenden Steuereinheiten baugleicher Untereinheiten, insbesondere Ventileinheiten, jeweils zusammen in einer von den Untereinheiten separaten baulichen Einheit angeordnet sind und/oder dass eine, mehrere oder jede der Recheneinheiten einen Command- und einen Monitor-Kanal aufweist oder daraus besteht und/oder dass das Steuerungssystem derart ausgebildet ist, dass kein Einzelfehler in einer der Recheneinheiten zu einem Verlust der Ansteuerung von mehr als zwei Steuereinheiten einer Untereinheit führt.

14. Luftfahrzeug, insbesondere Verkehrsflugzeug, Helikopter oder Kampfflugzeug, mit einem Steuerungssystem nach einem der vorhergehenden Ansprüche.

15. Verfahren zum Betreiben eines Steuerungssystems für ein Luftfahrzeug, insbesondere nach einem der Ansprüche 1 bis 21, **dadurch gekennzeichnet, dass** eine oder mehrere Recheneinheiten eine Stellung einer Untereinheit, insbesondere eines Stellglieds der Untereinheit, und/oder eine Steuereinheit einer Untereinheit eine Stellung eines Stellelements und/oder Steuerglieds dieser Untereinheit regeln.
